(19) Europäisches Patentamt
European Patent Office
Office européen des brevets

(11) EP 3 412 452 B1

(12) EUROPEAN PATENT SPECIFICATION

(45) Date of publication and mention of the grant of the patent:
**08.12.2021 Bulletin 2021/49**

(21) Application number: **17747488.9**

(22) Date of filing: **02.02.2017**

(51) Int Cl.:
***B32B 27/30*** *(2006.01)* ***B29C 55/12*** *(2006.01)*
***C08F 220/12*** *(2006.01)* ***G02B 5/30*** *(2006.01)*
***B29K 33/00*** *(2006.01)* ***B29L 9/00*** *(2006.01)*
***B29L 11/00*** *(2006.01)*

(86) International application number:
**PCT/JP2017/003682**

(87) International publication number:
**WO 2017/135336 (10.08.2017 Gazette 2017/32)**

(54) **STRETCHED MULTILAYER THERMOPLASTIC RESIN FILM**
GESTRECKTE MEHRLAGIGE THERMOPLASTISCHE HARZFOLIE
FILM DE RÉSINE THERMOPLASTIQUE MULTICOUCHE ÉTIRÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.02.2016 JP 2016021140**
**02.09.2016 JP 2016171669**

(43) Date of publication of application:
**12.12.2018 Bulletin 2018/50**

(73) Proprietor: **Mitsubishi Gas Chemical Company, Inc.**
**Tokyo 100-8324 (JP)**

(72) Inventors:
- **TAGUWA, Ken**
**Hiratsuka-shi**
**Kanagawa 254-0016 (JP)**
- **KOIKE, Nobuyuki**
**Tokyo 100-8324 (JP)**

(74) Representative: **Vossius & Partner**
**Patentanwälte Rechtsanwälte mbB**
**Siebertstrasse 3**
**81675 München (DE)**

(56) References cited:
**EP-A1- 2 583 825**
**WO-A1-2011/162183**
**WO-A1-2014/065294**
**JP-A- 2013 114 198**
**US-A1- 2011 038 045**
**US-A1- 2012 161 345**
**US-B2- 8 467 131**

- **WEIJUN ZHOU , KOPPI KURT, DIEHL CHARLES: "Birefringent properties of cyclic block copolymers and low-retardation-film development", JOURNAL OF THE SOCIETY FOR INFORMATION DISPLAY, vol. 18, no. 1, 1 January 2010 (2010-01-01), page 66, XP055059052, ISSN: 1071-0922, DOI: 10.1889/JSID18.1.66**
- **WEIJUN ZHOU , KOPPI KURT, DIEHL CHARLES: "59.1: Development of near Zero Optical Retardation Film from Cyclic Block Copolymers", S I D INTERNATIONAL SYMPOSIUM. DIGEST OF TECHNICAL PAPERS, vol. 40, no. 1, 1 January 2009 (2009-01-01), page 881, XP055600045, US ISSN: 0097-966X, DOI: 10.1889/1.3256936**
- **WEIJUN ZHOU , KOPPI KURT, DIEHL CHARLES: "(PDF) Birefringent properties of cyclic block copolymers and low-retardation-film development | Kurt Koppi - Academia.edu", , 18 January 2010 (2010-01-18), XP055643472, Retrieved from the Internet: URL:https://www.academia.edu/29314025/Birefringent_properties_of_cyclic_block_copolymers_and_low-retardation-film_development [retrieved on 2019-11-18]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### TECHNICAL FIELD

The present invention relates to a stretched multilayer thermoplastic resin film which is suitable for optical applications such as a polarizer protective film.

### BACKGROUND ART

In liquid crystal displays, a polarizing plate is used in order to convert transmitted light into linearly polarized light. In general, the polarizing plate is composed of three layers, wherein a polarizer protective film is bonded to both the surfaces of a polarizer.

As the polarizer, a uniaxially oriented film, in which iodine or a dye is adsorbed/dispersed in polyvinyl alcohol (hereinafter abbreviated as "PVA"), is usually used, but such a PVA-based polarizer has low mechanical properties, and tends to be easily shrunk by heat or moisture and have reduced polarizing function. For this reason, such a polarizer is used in the form of a laminate, wherein a polarizer protective film is bonded to both the surfaces of the polarizer. The polarizer protective film is required to have no birefringence, high light transmittance, excellent moisture-proof property/heat resistance, excellent mechanical properties, good adhesion to the PVA-based polarizer, etc. When using a polarizer protective film having excellent moisture-proof property, a UV-curable adhesive is generally used for bonding the polarizer and the polarizer protective film, but the polarizing function of the polarizer is reduced by UV irradiation at the time of curing. For this reason, recently, UV cut properties of 380 nm or less have been also required more often than before for the purpose of preventing reduction in the function of the polarizer at the time of UV curing.

As the polarizer protective film, a triacetyl cellulose (hereinafter abbreviated as "TAC") film is conventionally used. However, since the TAC film has insufficient moisture-proof property, for example, under high-temperature and high-humidity conditions, there are problems such as detachment from the polarizer, reduction in transparency and reduction in the polarization degree of the polarizer. Moreover, since TAC has a large photoelastic coefficient, the phase difference variation tends to be easily caused by external stress, and for example, depending on distortion caused at the time of actual use for the polarizing plate and dimensional change of PVA bonded, color unevenness may be caused or contrast in the peripheral portion may be reduced particularly in large-sized liquid crystal displays.

Patent Document 1 discloses that a polarizer protective film, which has a small photoelastic coefficient and has high optical isotropy even when stretched, can be obtained by using, as the main component, an acrylic copolymer having a lactone ring structural unit that imparts a positive phase difference and a structural unit derived from an aromatic monomer that imparts a negative phase difference. However, in order to obtain required UV cut properties by using the polarizer protective film of Patent Document 1, a large amount of an UV absorber must be added. Therefore, there is a case where roll contamination is caused by bleeding out of the UV absorber at the time of film forming, resulting in poor continuous productivity. In addition, since the acrylic copolymer of Patent Document 1 has high water absorbability, dimensional change and deterioration of film surface accuracy may occur under high humidity including high-temperature and high-humidity conditions.

Patent Document 2 discloses that a stretched film having excellent heat resistance, mechanical strength and optical isotropy can be obtained by stretching a thermoplastic transparent resin, which is obtained by hydrogenation of 70% or more of aromatic double bonds in a copolymer, wherein the molar ratio of a structural unit derived from a (meth)acrylic acid ester monomer to a structural unit derived from an aromatic vinyl monomer is 0.25 to 4. However, also in the case of the stretched film of Patent Document 2, a large amount of an ultraviolet absorber must be added in order to obtain required UV cut properties, and therefore, there is a case where roll contamination is caused by bleeding out of the ultraviolet absorber at the time of film forming, resulting in poor continuous productivity.

Further, in the case of a conventional stretched film, at the time of stretching, when the stretching temperature is low, the degree of orientation is high, and as a result, it is easy to obtain sufficient mechanical physical properties but birefringence tends to increase. When the stretching temperature is too low, a fracture may be generated in the film at the time of stretching. Meanwhile, when the stretching temperature is high, the degree of orientation is low, and a result, increase of birefringence is suppressed but it is difficult to obtain sufficient mechanical physical properties. When the stretching temperature is too high, a fracture may be generated in the film at the time of stretching or outer appearance may be deteriorated. EP 2583825 A1 describes a thermoplastic resin laminate obtained by co-extrusion.

### PRIOR ART DOCUMENTS

### PATENT DOCUMENTS

Patent Document 1: Japanese Patent No. 4878302
Patent Document 2: Japanese Laid-Open Patent Publication No. 2008-115314

## SUMMARY OF THE INVENTION

### PROBLEMS TO BE SOLVED BY THE INVENTION

Under the above-described circumstances, the objective of the present invention is to provide a stretched multilayer thermoplastic resin film having adhesion, stretchability, optical isotropy, mechanical strength and excellent continuous productivity, which is suitably used for a polarizer protective film.

### MEANS FOR SOLVING THE PROBLEMS

The present inventors diligently made researches in order to solve the above-described problems, and found that a film having continuous productivity, adhesion, stretchability, optical isotropy and mechanical strength can be obtained by stretching a thermoplastic resin laminate satisfying specific properties, and thus the present invention was achieved. The present invention provides a biaxially stretched multilayer thermoplastic resin film described below.
Note that in this specification, "(meth)acrylic acid" means acrylic acid or methacrylic acid.
The present invention is as defined in the claims.

### ADVANTAGEOUS EFFECT OF THE INVENTION

The biaxially stretched multilayer thermoplastic resin film obtained by the present invention has adhesion, stretchability, optical isotropy and mechanical strength, and therefore can be suitably used for optical applications such as a polarizer protective film. Moreover, the biaxially stretched multilayer thermoplastic resin film of the present invention has excellent continuous productivity because roll contamination due to bleeding out rarely occurs or does not occur at the time of film forming even when a low-molecular-weight additive such as an ultraviolet absorber is added.

### EMBODIMENTS FOR CARRYING OUT THE INVENTION

Hereinafter, the present invention will be described in detail. The stretched multilayer thermoplastic resin film of the present invention is a biaxially stretched multilayer thermoplastic resin film obtained by laminating a layer containing a thermoplastic resin (B) on at least one surface of a layer containing a methacrylate resin (A). The stretched film can be produced by biaxially stretching a thermoplastic resin laminate with the magnification of stretching in at least one stretching direction being 1.1 to 3.0 times, wherein:
methyl methacrylate constitutes at least 90 mol% of all structural units in the methacrylate resin (A); the intrinsic birefringence of the thermoplastic resin (B) is from -0.005 to 0.005; and the glass transition temperature TgA (°C) of the methacrylate resin (A) and the glass transition temperature TgB (°C) of the thermoplastic resin (B) satisfy the expression 5°C<(TgB-TgA)<50°C. In the present invention, the glass transition temperature is a temperature obtained by carrying out the measurement using a differential scanning calorimeter and 10 mg of a sample at a temperature raising rate of 10°C/min and calculation according to a midpoint method with second heating.
The methacrylate resin (A) to be used in the stretched multilayer thermoplastic resin film of the present invention is characterized in that methyl methacrylate constitutes at least 90 mol% of all structural units in the methacrylate resin (A). Preferably, methyl methacrylate constitutes 95 to 100 mol% of all the structural units in the methacrylate resin (A). When using the above-described methacrylate resin (A), the stretched multilayer thermoplastic resin film of the present invention has excellent transparency.
In the layer containing the methacrylate resin (A) to be used in the stretched multilayer thermoplastic resin film of the present invention, another resin and a rubber particle can be blended in addition to the methacrylate resin (A) as long as transparency and optical isotropy are not impaired. Examples of said another resin include polystyrene, a methyl methacrylate-styrene copolymer resin, an acrylonitrile-styrene copolymer resin, poly(methyl methacrylate), a methyl methacrylate-styrene-maleic anhydride copolymer resin, a styrene-maleic anhydride copolymer resin, a cyclic polyolefin resin, a maleimide-modified acrylic resin, polycarbonate, polyester and an acrylic rubber particle. Specific examples thereof include RESISFY R-100 (manufactured by Denki Kagaku Kogyo K.K.) and XIRAN SZ15170 (manufactured by Polyscope).
The thermoplastic resin (B) to be used in the stretched multilayer thermoplastic resin film of the present invention is a thermoplastic resin in which the intrinsic birefringence thereof is -0.005 to 0.005 and the glass transition temperature TgA (°C) of the methacrylate resin (A) and the glass transition temperature TgB (°C) of the thermoplastic resin (B) satisfy the expression 5°C<(TgB-TgA)<50°C. When the intrinsic birefringence of the thermoplastic resin (B) is smaller than

-0.005 or larger than 0.005, birefringence is developed in the layer containing the thermoplastic resin (B) at the time of stretching, and therefore it is not preferred. Further, it is more preferred that the photoelastic coefficient of the thermoplastic resin (B) is $-1.0\times10^{-11}$ to $1.0\times10^{-11}$ $m^2/N$. When the photoelastic coefficient of the thermoplastic resin (B) is smaller than $-1.0\times10^{-11}$ $m^2/N$ or larger than $1.0\times10^{-11}$ $m^2/N$, birefringence tends to be easily developed in the layer containing the thermoplastic resin (B) at the time of stretching and the phase difference variation due to external stress increases, and therefore it may be impractical depending on its intended use. When (TgB-TgA) is 5°C or lower, sufficient heat resistance is not imparted to a stretched film obtained, a low stretching temperature must be set and the effect of suppressing birefringence development in the layer containing the methacrylate resin (A) is poor, and therefore is it not preferred. When (TgB-TgA) is 50°C or higher, an extremely high stretching temperature must be set, it is difficult to increase the degree of orientation of the layer containing the methacrylate resin (A) and it is difficult to obtain sufficient mechanical physical properties, and therefore it is impractical. When the intrinsic birefringence of the thermoplastic resin (B) is -0.005 to 0.005 and the glass transition temperature TgA (°C) of the methacrylate resin (A) and the glass transition temperature TgB (°C) of the thermoplastic resin (B) satisfy the expression 5°C<(TgB-TgA)<50°C, stretching can be carried out at a stretching temperature at the time of stretching that is the same as or higher than the glass transition temperature TgB (°C) of the thermoplastic resin (B) and within the range of TgB+25 (°C) to TgB+65 (°C). Further, when reducing the degree of orientation and stress in the layer containing the methacrylate resin (A), birefringence development in the layer containing the methacrylate resin (A) is suppressed, and as a result, a stretched film obtained has excellent heat resistance, optical isotropy and mechanical strength. Examples of the thermoplastic resin satisfying the above-described matters include a vinyl copolymer resin (B1), a heat-resistant methacrylate resin in which heat resistance is improved by a structural unit of methacrylic acid or maleic anhydride, an acrylic copolymer containing a lactone ring structure and a styrene structural unit (for example, described in Patent Document 1), a cyclic polyolefin resin, a methyl methacrylate-phenylmaleimide-cyclohexylmaleimide copolymer, and a resin composition containing an acrylic copolymer having a glutarimide structural unit. Among them, the vinyl copolymer resin (B1) is most preferred because it has excellent adhesion to the layer containing the methacrylate resin (A) and small dimensional change at the time of water or moisture absorption. Hereinafter, the vinyl copolymer resin (B1) will be described in detail.

The vinyl copolymer resin (B1) that is suitably used as the thermoplastic resin (B) of the present invention is a thermoplastic resin containing a structural unit (a) derived from a (meth)acrylic acid ester monomer represented by general formula (1) below and a structural unit (b') derived from an aromatic vinyl monomer represented by general formula (2') below, and it is obtained by hydrogenation of 70% or more of aromatic double bonds in the structural unit (b') derived from the aromatic vinyl monomer in a vinyl copolymer resin (B1') in which the ratio of the structural unit (a) to the sum of the structural unit (a) and the structural unit (b') is 55 to 85 mol%. That is, the vinyl copolymer resin (B1') is a thermoplastic resin prior to hydrogenation of aromatic double bonds in the vinyl copolymer resin (B1).

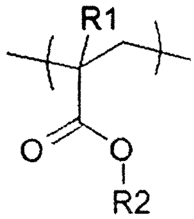

(1)

(In the formula, R1 represents a hydrogen atom or a methyl group, and R2 represents a $C_1$-$C_{16}$ hydrocarbon group.)

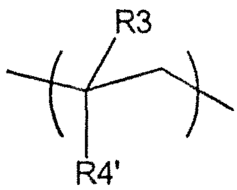

(2')

(In the formula, R3 represents a hydrogen atom or a methyl group, and R4' represents a phenyl group or a phenyl group having a $C_1$-$C_4$ hydrocarbon substituent.)

In the vinyl copolymer resin (B1), the molar ratio between the (meth)acrylic acid ester structural unit (a) represented by general formula (1) and the aliphatic vinyl structural unit (b) represented by general formula (2) is 55:45 to 85:15, and preferably 60:40 to 80:20. When the molar ratio of the (meth)acrylic acid ester structural unit (a) to the sum of the (meth)acrylic acid ester structural unit (a) and the aliphatic vinyl structural unit (b) is less than 55%, the adhesion to the layer containing the methacrylate resin (A) is low, and therefore it is not practical. Further, when the molar ratio is more than 85%, dimensional change of a stretched film obtained at the time of water or moisture absorption increases

and accuracy of film surfaces may be deteriorated, and therefore it is not preferred.

The ratio of the sum of the (meth)acrylic acid ester structural unit (a) and the aliphatic vinyl structural unit (b) to the sum of all the structural units in the thermoplastic resin (B) is 90 to 100 mol%, and more preferably 95 to 100 mol%.

In the structural unit (a) derived from the (meth)acrylic acid ester monomer represented by general formula (1) constituting the vinyl copolymer resin (B1'), R1 represents a hydrogen atom or a methyl group, and R2 represents a $C_1$-$C_{16}$ hydrocarbon group. When there are a plurality of the structural units (a), a plurality of R1s and R2s may be respectively the same or different from each other. The (meth)acrylic acid ester monomer is preferably a (meth)acrylic acid ester monomer in which R2 is at least one selected from a methyl group, an ethyl group, a butyl group, a lauryl group, a stearyl group, a cyclohexyl group and an isobornyl group. Specific examples thereof include (meth)acrylic acid alkyl esters such as methyl (meth)acrylate, ethyl (meth)acrylate, butyl (meth)acrylate, lauryl (meth)acrylate, stearyl (meth)acrylate, cyclohexyl (meth)acrylate and isobornyl (meth)acrylate. The structural unit (a) is more preferably a structural unit derived from at least one selected from methyl methacrylate and methyl acrylate. When the structural unit (a) of the vinyl copolymer resin (B1') is a structural unit derived from at least one selected from methyl methacrylate and methyl acrylate, the vinyl copolymer resin (B1) to be used in the stretched multilayer thermoplastic resin film of the present invention has excellent transparency.

In the structural unit (b') derived from the aromatic vinyl monomer represented by general formula (2'), R3 represents a hydrogen atom or a methyl group, and R4' represents a phenyl group or a phenyl group having a $C_1$-$C_4$ hydrocarbon substituent. When there are a plurality of the structural units (b'), a plurality of R3s and R4's may be respectively the same or different from each other. Examples of the aromatic vinyl monomer include at least one selected from styrene, α-methylstyrene, o-methylstyrene and p-methylstyrene. The structural unit (b') is more preferably a structural unit derived from styrene, wherein R3 represents a hydrogen atom and R4' represents a phenyl group. When the structural unit (b') is a structural unit derived from styrene, the vinyl copolymer resin (B) to be used in the stretched multilayer thermoplastic resin film of the present invention has excellent dimensional stability at the time of water or moisture absorption.

The vinyl copolymer resin (B1) to be suitably used as the thermoplastic resin (B) of the present invention can be obtained by hydrogenation of 70% or more of all aromatic double bonds in the structural unit (b') derived from the aromatic vinyl monomer in the vinyl copolymer resin (B1') according to the method described later. The vinyl copolymer resin (B1) may contain a structural unit in which a part of aromatic double bonds of a phenyl group of R4' (a phenyl group or a phenyl group having a $C_1$-$C_4$ hydrocarbon substituent) in the structural unit (b') are hydrogenated, and may contain a structural unit in which R4' is a phenyl group (i.e., a structural unit in which aromatic double bonds of a phenyl group are not hydrogenated). Specific examples of the structural unit in which a part of aromatic double bonds of a phenyl group of R4' are hydrogenated include structural units derived from cyclohexane, cyclohexene, cyclohexadiene, α-methylcyclohexane, α-methylcyclohexene, α-methylcyclohexadiene, o-methylcyclohexane, o-methylcyclohexene, o-methylcyclohexadiene, p-methylcyclohexane, p-methylcyclohexene and p-methylcyclohexadiene, and at least one structural unit selected from these examples may be contained. In particular, a structural unit derived from at least one selected from cyclohexane and α-methylcyclohexane is preferably contained.

The vinyl copolymer resin (B1') prior to hydrogenation of the vinyl copolymer resin (B1) that is suitably used as the thermoplastic resin (B) of the present invention can be produced by polymerization of the (meth)acrylic acid ester monomer and the aromatic vinyl monomer. A publicly-known method can be used for polymerization, and for example, the production can be carried out according to a bulk polymerization method, a solution polymerization method or the like. The bulk polymerization method is carried out, for example, by a method of continuously supplying a monomer composition containing the above-described monomers and a polymerization initiator to a complete mixing tank to perform continuous polymerization at 100 to 180°C. The above-described monomer composition may contain a chain transfer agent according to need.

The polymerization initiator is not particularly limited, and examples thereof include organic peroxides such as t-amyl peroxy-2-ethylhexanoate, t-butyl peroxy-2-ethylhexanoate, benzoyl peroxide, 1,1-di(t-hexylperoxy)-3,3,5-trimethylcyclohexane, 1,1-di(t-hexylperoxy)cyclohexane, 1,1-di(t-butylperoxy)cyclohexane, t-hexyl peroxyisopropyl monocarbonate, t-amyl peroxy-n-octoate, t-butyl peroxyisopropyl monocarbonate and di-t-butyl peroxide, and azo compounds such as 2,2'-azobisisobutyronitrile, 2,2'-azobis(2-methylbutyronitrile) and 2,2'-azobis(2,4-dimethylvaleronitrile). These substances may be used solely, or two or more of them may be used in combination.

The chain transfer agent may be used according to need, and examples thereof include α-methylstyrene dimer.

Examples of the solvent to be used in the solution polymerization method include hydrocarbon-based solvents such as toluene, xylene, cyclohexane and methylcyclohexane, ester-based solvents such as ethyl acetate and methyl isobutyrate, ketone-based solvents such as acetone and methyl ethyl ketone, ether-based solvents such as tetrahydrofuran and dioxane, and alcohol-based solvents such as methanol and isopropanol.

The vinyl copolymer resin (B1) that is suitably used as the thermoplastic resin (B) of the present invention is obtained by polymerizing the (meth)acrylic acid ester monomer and the aromatic vinyl monomer to obtain the vinyl copolymer resin (B1'), followed by hydrogenation of 70% or more of aromatic double bonds in the structural unit derived

from the aromatic vinyl monomer in the vinyl copolymer resin (B1'). The solvent to be used in the above-described hydrogenation reaction may be the same as or different from the aforementioned polymerization solvent. Examples thereof include hydrocarbon-based solvents such as cyclohexane and methylcyclohexane, ester-based solvents such as ethyl acetate and methyl isobutyrate, ketone-based solvents such as acetone and methyl ethyl ketone, ether-based solvents such as tetrahydrofuran and dioxane, and alcohol-based solvents such as methanol and isopropanol.

The method for hydrogenation is not particularly limited, and a publicly-known method can be used. For example, hydrogenation can be performed at a hydrogen pressure of 3 to 30 MPa and a reaction temperature of 60 to 250°C by means of a batch type or continuous flow-type reaction. When the temperature is 60°C or higher, the reaction time is not too long, and when the temperature is 250°C or lower, cut of a molecular chain and hydrogenation of an ester moiety are rarely caused.

Examples of the catalyst to be used in hydrogenation reaction include a solid catalyst in which a metal such as nickel, palladium, platinum, cobalt, ruthenium and rhodium, or an oxide, salt or complex of the metal is carried by a porous carrier such as carbon, alumina, silica, silica-alumina and diatomaceous earth.

The vinyl copolymer resin (B1) that is suitably used as the thermoplastic resin (B) of the present invention is obtained by hydrogenation of 70% or more of aromatic double bonds in the structural unit derived from the aromatic vinyl monomer in the vinyl copolymer resin (B1'). That is, the ratio of aromatic double bonds that remain in the structural unit derived from the aromatic vinyl monomer is 30% or less. When the ratio exceeds 30%, transparency of the vinyl copolymer resin (B1) is reduced, and as a result, transparency of the stretched multilayer thermoplastic resin film of the present invention may be reduced. The ratio of the aromatic double bonds that remain in the structural unit derived from the aromatic vinyl monomer is preferably less than 10%, and more preferably less than 5%. Further, the vinyl copolymer resin (B1) may contain generally-used additives such as an antioxidant, an anti-coloring agent, an ultraviolet absorber, a light diffusing agent, a flame retardant, a mold release agent, a lubricant, an antistatic agent and a stain pigment.

The weight average molecular weight of the vinyl copolymer resin (B1) is not particularly limited, and it is preferably 40,000 to 500,000, and more preferably 50,000 to 300,000 from the viewpoint of strength and moldability. The above-described weight average molecular weight is a standard polystyrene equivalent weight average molecular weight measured by gel permeation chromatography (GPC).

The glass transition temperature of the vinyl copolymer resin (B1) is preferably 110 to 160°C, and more preferably 120 to 145°C. When the glass transition temperature of the vinyl copolymer resin (B1) is lower than 110°C, dimensional change or warpage may occur in the stretched multilayer thermoplastic resin film provided by the present invention under high-temperature or high-humidity conditions. When the glass transition temperature of the vinyl copolymer resin (B1) is higher than 160°C, since it is necessary to set the stretching temperature at 180°C or higher at the time of stretching, the degree of orientation of the layer containing the methacrylate resin (A) is less likely to increase, and there is a case where sufficient mechanical physical properties cannot be obtained.

In the layer containing the vinyl copolymer resin (B1) that is suitably used as the thermoplastic resin (B) of the present invention, in addition to the vinyl copolymer resin (B1), another resin can be blended as long as transparency of the product is not impaired. Examples of said another resin include polystyrene, a methyl methacrylate-styrene copolymer resin, an acrylonitrile-styrene copolymer resin, poly(methyl methacrylate), polycarbonate and polyester. Specific examples (trade names) thereof include Estyrene MS200 (manufactured by Nippon Steel & Sumikin Chemical Co., Ltd.), RESISFY R-100 (manufactured by Denki Kagaku Kogyo K.K.), XIRAN SZ15170 (manufactured by Polyscope) and Toyo Styrene T080 (manufactured by TOYO STYRENE Co., Ltd.). Further, the vinyl copolymer resin (B1) may contain generally-used additives such as an antioxidant, an anti-coloring agent, an ultraviolet absorber, a light diffusing agent, a flame retardant, a mold release agent, a lubricant, an antistatic agent and a stain pigment.

The stretched multilayer thermoplastic resin film of the present invention is a biaxially stretched multilayer film with the magnification of stretching in at least one stretching direction being 1.1 to 3.0 times, obtained by laminating a layer containing the thermoplastic resin (B) on at least one surface of a layer containing the methacrylate resin (A), wherein methyl methacrylate constitutes at least 90 mol% of all structural units in the methacrylate resin (A); the intrinsic birefringence of the thermoplastic resin (B) is from -0.005 to 0.005; and the glass transition temperature TgA (°C) of the methacrylate resin (A) and the glass transition temperature TgB (°C) of the thermoplastic resin (B) satisfy the expression $5°C<(TgB-TgA)<50°C$. When the expression is satisfied, stretching can be carried out at a stretching temperature that is the same as or higher than the glass transition temperature TgB (°C) of the thermoplastic resin (B) and within the range of TgB+25 (°C) to TgB+65 (°C), and as a result, the birefringence development in the layer containing the methacrylate resin (A) due to stretching is suppressed, and the stretched multilayer thermoplastic resin film of the present invention has excellent optical isotropy. The expression is more preferably $10°C<(TgB-TgA)<40°C$, and even more preferably $12°C<(TgB-TgA)<36°C$. When (TgB-TgA) is lower than 5°C, it is difficult to obtain the effects of the present invention, and when (TgB-TgA) is higher than 50°C, the allowable range of the stretching temperature is narrowed, and therefore it is not preferred from a practical viewpoint.

Hereinafter, the layer containing the methacrylate resin (A) is sometimes referred to as "the methacrylate resin (A) layer", and the layer containing the thermoplastic resin (B) is sometimes referred to as "the thermoplastic resin (B)

layer". Examples of the layer structure include a two-layer structure consisting of two types of layers such as the methacrylate resin (A) layer/the thermoplastic resin (B) layer, and a three-layer structure consisting of two types of layers such as the thermoplastic resin (B) layer/the methacrylate resin (A) layer/thermoplastic resin (B) layer, and from the viewpoint of heat resistance, mechanical strength, dimensional change at the time of water or moisture absorption and deterioration of film surface accuracy of the stretched multilayer thermoplastic resin film obtained, preferred is a three-layer structure consisting of two types of layers, the thermoplastic resin (B) layer/the methacrylate resin (A) layer/thermoplastic resin (B) layer. When the thermoplastic resin (B) layer is laminated on at least one surface of the methacrylate resin (A) layer as described above, the stretched multilayer thermoplastic resin film of the present invention has excellent heat resistance, optical isotropy and mechanical strength.

The methacrylate resin (A) layer and/or the thermoplastic resin (B) layer of the stretched multilayer thermoplastic resin film of the present invention may contain an ultraviolet absorber. When a large amount of the ultraviolet absorber is required to be added, it is preferred to employ a three-layer structure consisting of two types of layers, the thermoplastic resin (B) layer/the methacrylate resin (A) layer/thermoplastic resin (B) layer, wherein the ultraviolet absorber is added only to the methacrylate resin (A) layer. When employing the three-layer structure consisting of two types of layers, the thermoplastic resin (B) layer/the methacrylate resin (A) layer/thermoplastic resin (B) layer, wherein the ultraviolet absorber is added only to the methacrylate resin (A) layer as described above, roll contamination due to bleeding out of the ultraviolet absorber does not occur at the time of film forming, and excellent continuous productivity can be obtained. Examples of the ultraviolet absorber to be added include: benzophenone-based ultraviolet absorbers such as 2,4-dihydroxybenzophenone, 2-hydroxy-4-methoxybenzophenone, 2-hydroxy-4-n-octoxybenzophenone, 2-hydroxy-4-dodecyloxybenzophenone, 2-hydroxy-4-octadecyloxybenzophenone, 2,2'-dihydroxy-4-methoxybenzophenone, 2,2'-dihydroxy-4,4'-dimethoxybenzophenone and 2,2',4,4'-tetrahydroxybenzophenone; benzotriazole-based ultraviolet absorbers such as 2-(2-hydroxy-5-methylphenyl)benzotriazole, 2-(2-hydroxy-3,5-di-t-butylphenyl)benzotriazole, 2-(2-hydroxy-3-t-butyl-5-methylphenyl)benzotriazole and (2H-benzotriazol-2-yl)-4,6-bis(1-methyl-1-phenylethyl)phenol; benzoate-based ultraviolet absorbers such as phenyl salicylate and 2,4-di-t-butylphenyl-3,5-di-t-butyl-4-hydroxybenzoate; hindered amine-based ultraviolet absorbers such as bis(2,2,6,6-tetramethylpiperidin-4-yl) sebacate; and triazine-based ultraviolet absorbers such as 2,4-diphenyl-6-(2-hydroxy-4-methoxyphenyl)-1,3,5-triazine, 2,4-diphenyl-6-(2-hydroxy-4-ethoxyphenyl)-1,3,5-triazine, 2,4-diphenyl-(2-hydroxy-4-propoxyphenyl)-1,3,5-triazine, 2,4-diphenyl-(2-hydroxy-4-butoxyphenyl)-1,3,5-triazine, 2,4-diphenyl-6-(2-hydroxy-4-butoxyphenyl)-1,3,5-triazine, 2,4-diphenyl-6-(2-hydroxy-4-hexyloxyphenyl)-1,3,5-triazine, 2,4-diphenyl-6-(2-hydroxy-4-octyloxyphenyl)-1,3 ,5-triazine, 2,4-diphenyl-6-(2-hydroxy-4-dodecyloxyphenyl)-1,3,5-triazine and 2,4-diphenyl-6-(2-hydroxy-4-benzyloxyphenyl)-1,3,5-triazine. The mixing method is not particularly limited, and it is possible to use a method of compounding the total amount of the ultraviolet absorber, a method of dry-blending a master batch or the like.

In the present invention, various types of additives other than the ultraviolet absorber can be mixed into the methacrylate resin (A) layer and/or thermoplastic resin (B) layer of the stretched multilayer thermoplastic resin film. Examples of such additives other than the ultraviolet absorber include an antioxidant, an anti-coloring agent, an antistatic agent, a mold release agent, a lubricant, a dye and a pigment. The mixing method is not particularly limited, and it is possible to use a method of compounding the total amount of the additives, a method of dry-blending a master batch, a method of dry-blending the total amount of the additives or the like.

In the method for producing the stretched multilayer thermoplastic resin film of the present invention, a thermoplastic resin laminate formed by a publicly-known multi-color injection molding method, film insert method, melt extrusion method, extrusion laminating method, hot pressing method, solution casting method or the like can be used as a raw material film (hereinafter just referred to as "the raw film") for a stretched film. From the viewpoint of the productivity, the melt extrusion method is particularly preferably used. When using the melt extrusion method, there is a case where, as a planar molded body as an intermediate, the raw film is not taken out and continuously subjected to a stretching step. In this regard, in the present invention, the state of the film immediately prior to be substantially stretched is defined as the raw film.

The preparation of the raw film by means of the melt extrusion method will be described in more detail. The raw film of thermoplastic transparent resin to be used in the present invention can be obtained by using a publicly-known melt extrusion method such as a T-die extrusion method and an inflation method. From the viewpoint of obtaining a raw film with a small uneven thickness, it is desirable to employ the T-die extrusion method. As an apparatus for melting a resin, a generally-used extruder may be used, and it may be either a single screw extruder or a multi-screw extruder. The extruder may have at least one vent, and moisture, a low-molecular-weight substance, etc. may be removed from molten resin by subjecting the vent to pressure reduction. Further, a wire mesh filter, a sintered filter, a gear pump, etc. may be provided to the end or downstream side of the extruder according to need. As a method for laminating resin, a publicly-known method such as a feed block method and a multi-manifold method can be used. Examples of T-dies include a coat hanger die, a fish-tail die and a stack plate die, and any of these examples may be selected.

The resin temperature at the time of extrusion is preferably 200 to 300°C. When the temperature is lower than 200°C, the flowability of resin is insufficient and the shape of the surface of a transfer roll is not transferred, resulting in

poor smoothness. Meanwhile, when the temperature is higher than 300°C, the resin is decomposed and this causes poor outer appearance, coloring, reduction in heat deformation resistance, deterioration of working environment due to odors, etc., and therefore it is not preferred. More preferably, the resin temperature at the time of extrusion is 220 to 280°C. When the temperature for extrusion is within the above-described range, the raw film obtained has excellent optical isotropy, smoothness and transparency.

As a method for cooling a molten resin extruded from a T-die, a conventionally known method can be used. In general, cooling is performed using a cooling roll. Since the methacrylate resin (A) and the thermoplastic resin (B) to be used in the present invention are substantially amorphous resins, the temperature of the cooling roll can be set in a wide range. For obtaining an optically isotropic optical film, the range of the temperature of the cooling roll is preferably the glass transition temperature of the thermoplastic resin (B) ±30°C, and more preferably the glass transition temperature of the thermoplastic resin (B) ±20°C. For obtaining a raw film having high optical isotropy, it is preferred to control the discharge rate, taking-up speed and temperature of the cooling roll depending on the apparatus so that the material is not substantially stretched.

The stretched multilayer thermoplastic resin film of the present invention is obtained by stretching the raw film. By means of stretching, mechanical strength is increased, and the stretched multilayer thermoplastic resin film, in which a crack or fracture is not easily generated, and which is excellent in handling properties, can be obtained. The stretching method is not particularly limited, and a publicly-known method can be used.

According to the present invention, biaxial stretching such as a simultaneous biaxial stretching method and a successive biaxial stretching method is used since unevenness of mechanical strength can be suppressed thereby.

When biaxial stretching is performed, the stretching magnification in at least one stretching direction is 1.1 to 3.0 times, and preferably 1.2 to 2.0 times. When the stretching magnification is within the range of 1.2 to 2.0 times, a large effect of improving mechanical strength is obtained. When the stretching magnification is not within the range of 1.1 to 3.0 times, there is a case where the effect of improving mechanical strength cannot be sufficiently obtained. Further, the stretching magnifications in two axial directions may be the same or different from each other. The stretching temperature is usually the glass transition temperature TgB (°C) of the thermoplastic resin (B) or higher, preferably TgB+25 (°C) to TgB+65 (°C), and more preferably TgB+30 (°C) to TgB+60 (°C). When the stretching temperature is lower than TgB+25 (°C), a fracture may be generated in the film and birefringence development in the layer containing the methacrylate resin (A) cannot be suppressed, and therefore it is not preferred. Further, when the stretching temperature is higher than TgB+65 (°C), outer appearance may be deteriorated due to flow of the resin, and in addition, it is difficult to increase the degree of orientation of the layer containing the methacrylate resin (A) and sufficient mechanical physical properties cannot be obtained, and therefore it is impractical. The stretching rate in the stretching direction is preferably 0.1 to 3.0 m/min. When the stretching rate is lower than 0.1 m/min, it is difficult to obtain high stretching strength, and in addition, it takes time to obtain a sufficient stretching magnification, and the productivity is not sufficient. When the stretching rate is higher than 3.0 m/min, a fracture or uneven thickness may be caused in the film.

The thickness of the stretched multilayer thermoplastic resin film of the present invention is preferably 10 to 1000 μm, and more preferably 20 to 200 μm. When the thickness is less than 10 μm, in the case of the production by means of extrusion molding, poor thickness precision is often caused and a fracture or the like tends to be easily generated at the time of stretching, and as a result, the probability of failure of the production becomes high. When the thickness is more than 1000 μm, it takes time to carry out stretching and the effect of improving mechanical physical properties is small, and therefore it is impractical. The thickness of the stretched multilayer thermoplastic resin film of the present invention can be adjusted by adjusting the film forming rate, thickness of a discharge port of a T-die, roll gap, etc. at the time of forming of a raw film, or by adjusting the stretching magnification at the time of stretching.

In the stretched multilayer thermoplastic resin film of the present invention, the ratio of the thickness of the layer containing the thermoplastic resin (B) to the total thickness of the layer containing the methacrylate resin (A) and the layer containing the thermoplastic resin (B) is preferably 5 to 50%. When the thickness of the layer containing the thermoplastic resin (B) is less than 5%, dimensional change of the stretched multilayer thermoplastic resin film obtained at the time of water or moisture absorption increases, and in addition, at the time of water or moisture absorption, a crack may be generated in the layer containing the thermoplastic resin (B) since the mechanical strength of the layer containing the thermoplastic resin (B) cannot endure dimensional change of the layer containing the methacrylate resin (A). Further, when the thickness of the layer containing the thermoplastic resin (B) is more than 50%, the effect of suppressing dimensional change is small, and in addition, in the case of a three-layer structure consisting of two types of layers, thermoplastic resin (B) layer/methacrylate resin (A) layer/thermoplastic resin (B) layer, wherein a ultraviolet absorber is added only to the layer containing the methacrylate resin (A), UV cut properties tend to be easily affected by uneven thickness of the layer containing the methacrylate resin (A), and it may be difficult to control UV cut properties of the stretched multilayer thermoplastic resin film obtained.

Any one or more of a hard coat treatment, an antireflection treatment, an antifouling treatment, an antistatic treatment, a weather resistance treatment and an anti-glare treatment can be performed on one surface or both surfaces of the stretched multilayer thermoplastic resin film of the present invention. The methods for these treatments are not

particularly limited, and publicly-known methods can be used. Examples thereof include a method of applying a thermosetting or photocurable film, a method of applying a reflection-reducing paint, a method of depositing a dielectric thin film and a method of applying an antistatic paint. A publicly-known coating agent can be used, and examples thereof include organic coating agents such as melamine resin, urethane resin, acrylic resin and UV curable acrylic resin, silicon-based coating agents such as a silane compound, inorganic coating agents such as a metal oxide, and organic-inorganic hybrid coating agents.

The in-plane retardation Re of the stretched multilayer thermoplastic resin film of the present invention is 0.0 to 3.0, and preferably 0.0 to 1.0. Further, the thickness direction retardation Rth of the stretched multilayer thermoplastic resin film of the present invention is -10.0 to 10.0, and preferably -6.0 to 6.0. Re and Rth can be obtained by the measurement of in-plane principal refractive indices, nx and ny (with the proviso that nx>ny) and principal refractive index in the thickness direction nz and calculation according to the below-described formula.

$$Re=(nx-ny)\times d \text{ (d: film thickness)}$$

$$Rth=((nx+ny)/2-nz)\times d$$

EXAMPLES

Hereinafter, the present invention will be described in detail by way of the Examples, but the present invention is not limited by the Examples and Comparative Examples. The stretched multilayer thermoplastic resin films obtained in the Examples and Comparative Examples were evaluated as described below.

<Hydrogenation ratio of copolymer>

Regarding the thermoplastic resins obtained in Synthesis Examples described below, the hydrogenation ratio was obtained based on the decrease ratio of absorption at 260 nm in the UV spectrum measurement before and after hydrogenation reaction. Using the absorbance A1 in the case of the concentration C1 of resin before hydrogenation reaction and the absorbance A2 in the case of the concentration C2 of resin after hydrogenation reaction, calculation was carried out according to the below-described formula.

$$\text{Hydrogenation ratio}=100\times[1-(A2\times C1)/(A1\times C2)]$$

<Intrinsic birefringence value>

Regarding the thermoplastic resins obtained in Synthesis Examples described below, the difference in dielectric polarization of bonding units of respective structural units was calculated according to the molecular orbital method, and as a volume average value thereof, an intrinsic birefringence value was calculated according to the below-described Lorentz-Lorenz equation.

$$\Delta n_0=2/9\pi\times(n^2+2)^2/n\times\Delta P\cdot d\cdot N/M$$

($\Delta n_0$: intrinsic birefringence value, $\Delta P$: difference between dielectric polarization in the direction of molecular chain axis and dielectric polarization in the direction perpendicular to the molecular chain axis, n: refractive index, d: density, N: Avogadro's number, M: molecular weight)

<Evaluation of continuous productivity>

In the preparation of the raw material films of the Examples and Comparative Examples described below, molding was continuously performed for 6 hours, and after that, the surfaces of mirror surface rolls were visually observed. The case where contamination derived from bleeding out of an additive was not caused on the surfaces of the mirror surface rolls was regarded as "passed" (○), and the other cases were regarded as "failed" (×).

<Thickness>

The stretched multilayer thermoplastic resin films obtained in the Examples and Comparative Examples described below were measured using a digital micrometer (manufactured by Sony Magnescale Co., Ltd., M-30). The average of 10 measurement points of the obtained stretched multilayer thermoplastic resin film was regarded as the thickness of the film.

<Evaluation of stretchability>

Regarding the raw material films obtained in the Examples and Comparative Examples described below, a test piece with a size of 110 mm×110 mm was obtained by cutting, and using a fixed end simultaneous biaxial stretching machine, biaxial stretching was carried out with a predetermined stretching temperature, preheating time of 40 seconds, stretching rate of 300 mm/min, and stretching magnifications of 1.85 times (vertical) and 1.85 times (horizontal). The case where a fracture and uneven thickness were not caused at the time of stretching in 9 or more out of 10 pieces was regarded as "passed" (○), and the other cases were regarded as "failed" (×).

<Evaluation of adhesion>

Regarding the stretched multilayer thermoplastic resin films obtained in the Examples and Comparative Examples described below, a test piece with a size of 100 mm×300 mm was obtained by cutting, the test piece was pressed to a cylinder having a diameter of 80 mm so that the long side was in the circumferential direction, and the presence or absence of detachment of the interface between laminated resins was evaluated. The case where detachment was caused in 2 or less out of 10 pieces was regarded as "passed" (○), and the other cases were regarded as "failed" (×).

<Optical isotropy>

Regarding the stretched multilayer thermoplastic resin films obtained in the Examples and Comparative Examples described below, a slow phase axis was detected at a measurement wavelength of 590 nm using a spectroscopic ellipsometer (manufactured by JASCO Corporation, M-220), and in-plane principal refractive indices, nx and ny (with the proviso that nx>ny) and a principal refractive index in the thickness direction nz were measured with the three-dimensional refractive index measurement mode (tilt angle: -8 to 8°). The in-plane retardation Re and the thickness direction retardation Rth were calculated according to the below-described formula. The case where the in-plane retardation Re was within the range of 0.0 to 3.0 nm was regarded as "passed" (○), and the other cases were regarded as "failed" (×). Further, the case where the thickness direction retardation Rth was within the range of -10.0 to 10.0 nm was regarded as "passed" (○), and the other cases were regarded as "failed" (×).

$$Re=(nx-ny)\times d \text{ (d: film thickness)}$$

$$Rth=((nx+ny)/2-nz)\times d$$

<Mechanical strength (folding resistance)>

Regarding the stretched multilayer thermoplastic resin films obtained in the Examples and Comparative Examples described below, the number of times of folding until a fracture was generated was measured with a folding angle of 135° to the left and right from the center, a load of 500 g and a rate of 180 times/min using an MIT type folding endurance tester (manufactured by Toyo Seiki Seisaku-sho, Ltd.) in accordance with JIS P 8115. The case where the number of times of folding until a fracture was generated was 50 times or more was regarded as "passed" (○), and the other cases were regarded as "failed" (×).

Synthesis Example 1 [Production of vinyl copolymer resin (B1)]

A monomer composition consisting of 77.0 mol% of purified methyl methacrylate (manufactured by Mitsubishi Gas Chemical Company, Inc.), 23.0 mol% of purified styrene (manufactured by Wako Pure Chemical Industries, Ltd.) and 0.002 mol% of t-amyl peroxy-2-ethylhexanoate (manufactured by Arkema Yoshitomi, Ltd., trade name: Luperox 575) as a polymerization initiator was continuously fed to a 10-L complete mixing bath equipped with a helical ribbon impeller at a feed rate of 1 kg/h, and the monomer composition was continuously polymerized at a polymerization

temperature of 150°C for an average retention time of 2.5 hours. The reaction mixture was continuously removed through the bottom of the polymerization bath so that the liquid surface in the bath became constant, and it was introduced into a solvent-removing apparatus, thereby obtaining a vinyl copolymer resin (B1') in a pellet form.

The obtained vinyl copolymer resin (B1') was dissolved in methyl isobutylate (manufactured by Kanto Chemical Co., Inc.), thereby preparing a 10 wt% solution of methyl isobutylate. To a 1000-mL autoclave, 500 parts by weight of the 10 wt% solution of methyl isobutylate containing (B1') and 1 part by weight of 10 wt% Pd/C (manufactured by N.E. Chemcat Corporation) were fed, and the mixture was maintained under a hydrogen pressure of 9 MPa at 200°C for 15 hours, thereby hydrogenating a benzene ring moiety. The catalyst was removed using a filter, and the filtrate was introduced into a solvent-removing apparatus, thereby obtaining a vinyl copolymer resin (B1) in a pellet form. According to the $^1$H-NMR measurement, the ratio of the methyl methacrylate structural unit was 75 mol%, and according to the measurement of absorbance at a wavelength of 260 nm, the hydrogenation rate of the benzene ring moiety was 99%. The glass transition temperature of the obtained vinyl copolymer resin (B1) was 120°C. Further, the intrinsic birefringence of the obtained vinyl copolymer resin (B1) was -0.0003.

Synthesis Example 2 [Production of vinyl copolymer resin (B2)]

A vinyl copolymer resin (B2) was obtained in a manner similar to that in Synthesis Example 1, except that the amount of the methyl methacrylate used in Synthesis Example 1 was changed to 62.0 mol% and the amount of the styrene was changed to 38.0 mol%. According to the $^1$H-NMR measurement, the ratio of the methyl methacrylate structural unit was 60 mol%, and according to the measurement of absorbance at a wavelength of 260 nm, the hydrogenation rate of the benzene ring moiety was 99%. The glass transition temperature of the obtained vinyl copolymer resin (B2) was 120°C. Further, the intrinsic birefringence of the obtained vinyl copolymer resin (B2) was +0.0021.

Synthesis Example 3 [Production of vinyl copolymer resin (B3)]

A vinyl copolymer resin (B3) was obtained in a manner similar to that in Synthesis Example 1, except that the amount of the methyl methacrylate used in Synthesis Example 1 was changed to 32.000 mol% and the amount of the styrene was changed to 68.0 mol%. According to the $^1$H-NMR measurement, the ratio of the methyl methacrylate structural unit was 30 mol%, and according to the measurement of absorbance at a wavelength of 260 nm, the hydrogenation rate of the benzene ring moiety was 99%. The glass transition temperature of the obtained vinyl copolymer resin (B3) was 123°C. Further, the intrinsic birefringence of the obtained vinyl copolymer resin (B3) was +0.0073.

Synthesis Example 4 [Production of vinyl copolymer resin (B4)]

A vinyl copolymer resin (B4) was obtained in a manner similar to that in Synthesis Example 1, except that the reaction time for hydrogenation of the benzene ring moiety was changed to 5 hours. According to the $^1$H-NMR measurement, the ratio of the methyl methacrylate structural unit was 75 mol%, and according to the measurement of absorbance at a wavelength of 260 nm, the hydrogenation rate of the benzene ring moiety was 82%. The glass transition temperature of the obtained vinyl copolymer resin (B4) was 116°C. Further, the intrinsic birefringence of the obtained vinyl copolymer resin (B4) was -0.0055.

Production Example 1 [Production of methacrylate resin (A1)]

100 parts by weight of methyl methacrylate (SUMIPEX MG5 manufactured by Sumitomo Chemical Co., Ltd. (intrinsic birefringence: -0.0043, glass transition temperature: 105°C)) and 1.2 parts by weight of a triazine-based ultraviolet absorber (ADK STAB LA-F70 manufactured by ADEKA Corporation) were continuously introduced into a twin screw extruder having a screw diameter of 30 mm and extruded at a cylinder temperature of 250°C and a discharge rate of 25 kg/hour, thereby obtaining a methacrylate resin (A1) in which the ultraviolet absorber was added to methyl methacrylate.

Example 1 [Resin (B1)/resin (A1)/resin (B1), layer ratio 1:3:1, stretching temperature: 150°C]

A laminate was molded using a multilayer extruder having a single screw extruder with a screw diameter of 32 mm, a single screw extruder with a screw diameter of 65 mm, a feed block connected to all the extruders and a T-die connected to the feed block. The vinyl copolymer resin (B1) obtained in Synthesis Example 1 was continuously introduced into the single screw extruder with the screw diameter of 32 mm and extruded at a cylinder temperature of 250°C and a discharge rate of 24.0 kg/hour. Further, the methacrylate resin (A1) obtained in Production Example 1 was continuously introduced into the single screw extruder with the screw diameter of 65 mm and extruded at a cylinder temperature of

250°C and a discharge rate of 36.0 kg/hour. The feed block connected to all the extruders had a distribution pin for three layers consisting of two types of resins, and the methacrylate resin (A1) and the vinyl copolymer resin (B1) were introduced into it at 250°C to perform lamination. The laminated product was extruded into a sheet shape with the T-die connected to the feed block at 250°C, and it was cooled using 3 mirror surface rolls each at 110°C, 95°C and 90°C from the upstream side, thereby obtaining a raw film in which the vinyl copolymer resin (B1) was laminated on both the surfaces of the methacrylate resin (A1). The thickness of the obtained raw film was 140 μm, and roll contamination did not occur at the time of continuous molding. The obtained raw film was biaxially stretched using a fixed end simultaneous biaxial stretching machine. The stretching temperature was set at 150°C, which was 30°C higher than the glass transition temperature of the vinyl copolymer resin (B1), the preheating time was sufficiently provided, the stretching rate was 300 mm/min, the stretching magnifications were 1.85 times (vertical) and 1.85 times (horizontal), and thus a stretched multilayer thermoplastic resin film was prepared. The thickness of the obtained stretched multilayer thermoplastic resin film was 40 μm, the thicknesses of the respective layers near the center thereof were (B1)/(A1)/(B1)=8 μm/24 μm/8 μm, and the ratio of the thickness of the vinyl copolymer resin (B1) to the total thickness of the vinyl copolymer resin (B1) and the methacrylate resin (A1) was 40%. Further, the difference between the glass transition temperature of the methacrylate resin (A1) and that of the vinyl copolymer resin (B1) was 15°C. The evaluation results regarding continuous productivity, adhesion, stretchability, optical isotropy and mechanical strength were all good, and the synthetic judgement was "passed" (○).

Example 2 [Resin (B1)/resin (A1)/resin (B1), layer ratio 1:3:1, stretching temperature: 160°C]

The vinyl copolymer resin (B1) was laminated on both the surfaces of the methacrylate resin (A1) and the obtained product was stretched, thereby obtaining a stretched multilayer thermoplastic resin film in a manner similar to that in Example 1, except that the stretching temperature was changed to 160°C. Roll contamination did not occur at the time of continuous molding of the raw film. The thickness of the obtained stretched multilayer thermoplastic resin film was 40 μm, the thicknesses of the respective layers near the center thereof were (B1)/(A1)/(B1)=8 μm/24 μm/8 μm, and the ratio of the thickness of the vinyl copolymer resin (B1) to the total thickness of the vinyl copolymer resin (B1) and the methacrylate resin (A1) was 40%. Further, the difference between the glass transition temperature of the methacrylate resin (A1) and that of the vinyl copolymer resin (B1) was 15°C. The evaluation results regarding continuous productivity, adhesion, stretchability, optical isotropy and mechanical strength were all good, and the synthetic judgement was "passed" (○).

Example 3 [Resin (B1)/resin (A1)/resin (B1), layer ratio 1:3:1, stretching temperature: 170°C]

The vinyl copolymer resin (B1) was laminated on both the surfaces of the methacrylate resin (A1) and the obtained product was stretched, thereby obtaining a stretched multilayer thermoplastic resin film in a manner similar to that in Example 1, except that the stretching temperature was changed to 170°C. Roll contamination did not occur at the time of continuous molding of the raw film. The thickness of the obtained stretched multilayer thermoplastic resin film was 40 μm, the thicknesses of the respective layers near the center thereof were (B1)/(A1)/(B1)=8 μm/24 μm/8 μm, and the ratio of the thickness of the vinyl copolymer resin (B1) to the total thickness of the vinyl copolymer resin (B1) and the methacrylate resin (A1) was 40%. Further, the difference between the glass transition temperature of the methacrylate resin (A1) and that of the vinyl copolymer resin (B1) was 15°C. The evaluation results regarding continuous productivity, adhesion, stretchability, optical isotropy and mechanical strength were all good, and the synthetic judgement was "passed" (○).

Example 4 [Resin (B1)/resin (A1)/resin (B1), layer ratio 1:4:1, stretching temperature: 160°C]

The vinyl copolymer resin (B1) was laminated on both the surfaces of the methacrylate resin (A1) and the obtained product was stretched, thereby obtaining a stretched multilayer thermoplastic resin film in a manner similar to that in Example 2, except that the discharge rate of the single screw extruder with the screw diameter of 32 mm was changed to 20.0 kg/h and the discharge rate of the single screw extruder with the screw diameter of 65 mm was changed to 40.0 kg/h to perform extrusion. Roll contamination did not occur at the time of continuous molding of the raw film. The thickness of the obtained stretched multilayer thermoplastic resin film was 40 μm, the thicknesses of the respective layers near the center thereof were (B1)/(A1)/(B1)=6.5 μm/27 μm/6.5 μm, and the ratio of the thickness of the vinyl copolymer resin (B1) to the total thickness of the vinyl copolymer resin (B1) and the methacrylate resin (A1) was 33%. Further, the difference between the glass transition temperature of the methacrylate resin (A1) and that of the vinyl copolymer resin (B1) was 15°C. The evaluation results regarding continuous productivity, adhesion, stretchability, optical isotropy and mechanical strength were all good, and the synthetic judgement was "passed" (○).

Example 5 [Resin (B1)/resin (A1)/resin (B1), layer ratio 1:5:1, stretching temperature: 160°C]

The vinyl copolymer resin (B1) was laminated on both the surfaces of the methacrylate resin (A1) and the obtained product was stretched, thereby obtaining a stretched multilayer thermoplastic resin film in a manner similar to that in Example 2, except that the discharge rate of the single screw extruder with the screw diameter of 32 mm was changed to 17.0 kg/h and the discharge rate of the single screw extruder with the screw diameter of 65 mm was changed to 43.0 kg/h to perform extrusion. Roll contamination did not occur at the time of continuous molding of the raw film. The thickness of the obtained stretched multilayer thermoplastic resin film was 40 μm, the thicknesses of the respective layers near the center thereof were (B1)/(A1)/(B1)=5.5 μm/29 μm/5.5 μm, and the ratio of the thickness of the vinyl copolymer resin (B1) to the total thickness of the vinyl copolymer resin (B1) and the methacrylate resin (A1) was 28%. Further, the difference between the glass transition temperature of the methacrylate resin (A1) and that of the vinyl copolymer resin (B1) was 15°C. The evaluation results regarding continuous productivity, adhesion, stretchability, optical isotropy and mechanical strength were all good, and the synthetic judgement was "passed" (○).

Example 6 [Resin (B2)/resin (A1)/resin (B2), layer ratio 1:3:1, stretching temperature: 160°C]

The vinyl copolymer resin (B2) was laminated on both the surfaces of the methacrylate resin (A1) and the obtained product was stretched, thereby obtaining a stretched multilayer thermoplastic resin film in a manner similar to that in Example 2, except that the vinyl copolymer resin (B2) obtained in Synthesis Example 2 was introduced instead of the vinyl copolymer resin (B1). Roll contamination did not occur at the time of continuous molding of the raw film. The thickness of the obtained stretched multilayer thermoplastic resin film was 40 μm, the thicknesses of the respective layers near the center thereof were (B2)/(A1)/(B2)=8 μm/24 μm/8 μm, and the ratio of the thickness of the vinyl copolymer resin (B2) to the total thickness of the vinyl copolymer resin (B2) and the methacrylate resin (A1) was 40%. Further, the difference between the glass transition temperature of the methacrylate resin (A1) and that of the vinyl copolymer resin (B2) was 15°C. The evaluation results regarding continuous productivity, adhesion, stretchability, optical isotropy and mechanical strength were all good, and the synthetic judgement was "passed" (○).

Comparative Example 1 [Resin (B1)/resin (A1)/resin (B1), layer ratio 1:3:1, stretching temperature: 130°C]

The vinyl copolymer resin (B1) was laminated on both the surfaces of the methacrylate resin (A1) to obtain a raw film in a manner similar to that in Example 1, except that the stretching temperature was changed to 130°C. The thickness of the obtained raw film was 140 μm, and roll contamination did not occur at the time of continuous molding. Further, the difference between the glass transition temperature of the methacrylate resin (A1) and that of the vinyl copolymer resin (B1) was 15°C. The evaluation results regarding continuous productivity and adhesion were good. However, the evaluation result regarding stretchability was poor, and for this reason, it was impossible to obtain a stretched film, and it was impossible to perform the other evaluations. The synthetic judgement was "failed" (×).

Comparative Example 2 [Resin (B3)/resin (A1)/resin (B3), layer ratio 1:3:1, stretching temperature: 160°C]

The vinyl copolymer resin (B3) was laminated on both the surfaces of the methacrylate resin (A1) and the obtained product was stretched, thereby obtaining a stretched multilayer thermoplastic resin film in a manner similar to that in Example 2, except that the vinyl copolymer resin (B3) obtained in Synthesis Example 3 was introduced instead of the vinyl copolymer resin (B1). Roll contamination did not occur at the time of continuous molding of the raw film. The thickness of the obtained stretched multilayer thermoplastic resin film was 40 μm, the thicknesses of the respective layers near the center thereof were (B3)/(A1)/(B3)=8 μm/24 μm/8 μm, and the ratio of the thickness of the vinyl copolymer resin (B3) to the total thickness of the vinyl copolymer resin (B3) and the methacrylate resin (A1) was 40%. Further, the difference between the glass transition temperature of the methacrylate resin (A1) and that of the vinyl copolymer resin (B3) was 18°C. The evaluation results regarding continuous productivity and optical isotropy were good. However, the evaluation results regarding stretchability and adhesion were poor, and it was impossible to perform the other evaluation. The synthetic judgement was "failed" (×).

Comparative Example 3 [Resin (B4)/resin (A1)/resin (B4), layer ratio 1:3:1, stretching temperature: 160°C]

The vinyl copolymer resin (B4) was laminated on both the surfaces of the methacrylate resin (A1) and the obtained product was stretched, thereby obtaining a stretched multilayer thermoplastic resin film in a manner similar to that in Example 2, except that the vinyl copolymer resin (B4) was introduced instead of the vinyl copolymer resin (B1). Roll contamination did not occur at the time of continuous molding of the raw film. The thickness of the obtained stretched multilayer thermoplastic resin film was 40 μm, the thicknesses of the respective layers near the center thereof were

(B4)/(A1)/(B4)=8 μm/24 μm/8 μm, and the ratio of the thickness of the vinyl copolymer resin (B4) to the total thickness of the vinyl copolymer resin (B4) and the methacrylate resin (A1) was 40%. Further, the difference between the glass transition temperature of the methacrylate resin (A1) and that of the vinyl copolymer resin (B4) was 11°C. The evaluation results regarding continuous productivity, adhesion, stretchability and mechanical strength were all good. However, the evaluation result regarding optical isotropy was poor, and the synthetic judgement was "failed" (×).

Comparative Example 4 [Resin (A1), stretching temperature: 150°C]

A single layer body was molded using a single layer extruder having a single screw extruder with a screw diameter of 65 mm and a T-die connected to the extruder. The methacrylate resin (A1) obtained in Production Example 1 was continuously introduced into the single screw extruder and extruded at a cylinder temperature of 250°C and a discharge rate of 50.0 kg/hour. The extruded product was extruded into a sheet shape with the T-die connected to the extruder at 250°C, and it was cooled using 3 mirror surface rolls each at 90°C, 82°C and 105°C from the upstream side, thereby obtaining a raw film of the methacrylate resin (A1). The thickness of the obtained raw film was 140 μm. Roll contamination occurred at the time of continuous molding of the raw film. The obtained raw film was biaxially stretched using a fixed end simultaneous biaxial stretching machine. The stretching temperature was set at 150°C, which was 45°C higher than the glass transition temperature of the methacrylate resin (A1), the preheating time was sufficiently provided, the stretching rate was 300 mm/min, the stretching magnifications were 1.85 times (vertical) and 1.85 times (horizontal), and thus a stretched film of the methacrylate resin (A1) was prepared. The thickness of the obtained stretched film of the methacrylate resin (A1) was 40 μm. The evaluation results regarding stretchability and mechanical strength were good. However, the evaluation results regarding continuous productivity and optical isotropy were poor, and the synthetic judgement was "failed" (×).

Comparative Example 5 [Resin (A1), stretching temperature: 160°C]

A raw film of the methacrylate resin (A1) was obtained in a manner similar to that in Comparative Example 4, except that the stretching temperature was changed to 160°C. Roll contamination occurred at the time of continuous molding of the raw film. The thickness of the obtained raw film was 140 μm. The evaluation results regarding continuous productivity and stretchability were poor, and it was impossible to obtain a stretched film. It was impossible to perform the other evaluations. The synthetic judgement was "failed" (×).

Table 1

| | Constitution | | Layer ratio | Stretching temperature | Continuous productivity | Stretchability | Adhesion | Re (nm) | Rth (nm) | Folding resistance (times) | Synthetic judgement |
|---|---|---|---|---|---|---|---|---|---|---|---|
| | Core layer | Skin layer | | | | | | | | | |
| Example 1 | Resin (A1) | Resin (B1) | 1:3:1 | 150 | ○ | ○ 10/10 | ○ 0/10 | ○ 1.0 | ○ -7.2 | ○ 311 | ○ |
| Example 2 | Resin (A1) | Resin (B1) | 1:3:1 | 160 | ○ | ○ 10/10 | ○ 0/10 | ○ 0.4 | ○ -4.3 | ○ 133 | ○ |
| Example 3 | Resin (A1) | Resin (B1) | 1:3:1 | 170 | ○ | ○ 10/10 | ○ 0/10 | ○ 0.0 | ○ -4.1 | ○ 77 | ○ |
| Example 4 | Resin (A1) | Resin (B1) | 1:4:1 | 160 | ○ | ○ 10/10 | ○ 0/10 | ○ 0.4 | ○ -5.1 | ○ 125 | ○ |
| Example 5 | Resin (A1) | Resin (B1) | 1:5:1 | 160 | ○ | ○ 10/10 | ○ 0/10 | ○ 0.4 | ○ -5.5 | ○ 110 | ○ |
| Example 6 | Resin (A1) | Resin (B2) | 1:3:1 | 160 | ○ | ○ 9/10 | ○ 1/10 | ○ 0.4 | ○ -4.3 | ○ 130 | ○ |
| Comparative Example 1 | Resin (A1) | Resin (B1) | 1:3:1 | 130 | ○ | × 0/10 | ○ 0/10 | - | - | - | × |
| Comparative Example 2 | Resin (A1) | Resin (B3) | 1:3:1 | 160 | ○ | × 1/10 | × 10/10 | ○ 1.0 | ○ -3.8 | - | × |
| Comparative Example 3 | Resin (A1) | Resin (B4) | 1:3:1 | 160 | ○ | ○ 10/10 | ○ 0/10 | × 4.5 | × -42.5 | ○ 80 | × |
| Comparative Example 4 | Resin (A1) | | - | 150 | × | ○ 10/10 | - | ○ 1.0 | × -10.3 | ○ 202 | × |
| Comparative Example 5 | Resin (A1) | | - | 160 | × | × 0/10 | - | - | - | - | × |

## Claims

1. A stretched multilayer thermoplastic resin film comprising a layer containing a thermoplastic resin (B) on at least one surface of a layer containing a methacrylate resin (A), wherein methyl methacrylate constitutes at least 90 mol% of all structural units in the methacrylate resin (A); an intrinsic birefringence of the thermoplastic resin (B) is from -0.005 to 0.005; and a glass transition temperature TgA (°C) of the methacrylate resin (A) and a glass transition temperature TgB (°C) of the thermoplastic resin (B) satisfy the expression 5°C<(TgB-TgA)<50°C,

   wherein the film has an in-plane retardation Re of 0.0 to 3.0 nm and a thickness direction retardation Rth of -10.0 to 10.0 nm,
   wherein the thermoplastic resin (B) comprises a (meth)acrylic acid ester structural unit (a) represented by general formula (1) below:

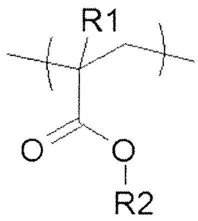

(1)

   (wherein R1 represents a hydrogen atom or a methyl group, and R2 represents a $C_1$-$C_{16}$ hydrocarbon group), and an aliphatic vinyl structural unit (b) represented by general formula (2) below:

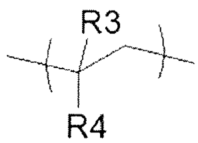

(2)

   (wherein R3 represents a hydrogen atom or a methyl group, and R4 represents a cyclohexyl group or a cyclohexyl group having a $C_1$-$C_4$ hydrocarbon substituent), and wherein the ratio of the sum of the (meth)acrylic acid ester structural unit (a) and the aliphatic vinyl structural unit (b) is 90 to 100 mol% relative to all the structural units in the thermoplastic resin (B), and wherein the molar ratio between the (meth)acrylic acid ester structural unit (a) and the aliphatic vinyl structural unit (b) is 55:45 to 85:15,
   **characterized in that** the film is biaxially stretched,
   wherein a magnification of stretching in at least one stretching direction is 1.1 to 3.0 times.

2. The stretched multilayer thermoplastic resin film according to claim 1, wherein each of R1 and R2 in general formula (1) is a methyl group.

3. The stretched multilayer thermoplastic resin film according to claim 1 or 2, wherein R4 in general formula (2) is a cyclohexyl group.

4. The stretched multilayer thermoplastic resin film according to any one of claims 1 to 3, which has the layer containing the thermoplastic resin (B) on both the surfaces of the layer containing the methacrylate resin (A).

5. The stretched multilayer thermoplastic resin film according to any one of claims 1 to 4, which has a total thickness of 10 to 1000 μm.

6. The stretched multilayer thermoplastic resin film according to any one of claims 1 to 5, wherein the ratio of the thickness of the layer containing the thermoplastic resin (B) to the total thickness of the layer containing the methacrylate resin (A) and the layer containing the thermoplastic resin (B) is 5 to 50%.

7. The stretched multilayer thermoplastic resin film according to any one of claims 1 to 6, wherein the layer containing the thermoplastic resin (B) contains at least one selected from the group consisting of an ultraviolet absorber, an antioxidant, an anti-coloring agent, an antistatic agent, a mold release agent, a lubricant, a dye and a pigment.

**8.** An optical film comprising the stretched multilayer thermoplastic resin film according to any one of claims 1 to 7.

**9.** A polarizer protective film comprising the optical film according to claim 8.

**10.** A method for producing the stretched multilayer thermoplastic resin film according to any one of claims 1 to 7, which comprises stretching at a stretching temperature of TgB+25 (°C) to TgB+65 (°C).

**Patentansprüche**

**1.** Eine gestreckte mehrlagige thermoplastische Harzfolie, umfassend eine Schicht, die ein thermoplastisches Harz (B) auf mindestens einer Oberfläche einer Schicht enthält, die ein Methacrylatharz (A) enthält, wobei Methylmethacrylat mindestens 90 Mol-% aller Struktureinheiten in dem Methacrylatharz (A) ausmacht; eine intrinsische Doppelbrechung des thermoplastischen Harzes (B) von -0,005 bis 0,005 beträgt; und eine Glasübergangstemperatur TgA (°C) des Methacrylatharzes (A) und eine Glasübergangstemperatur TgB (°C) des thermoplastischen Harzes (B) den Ausdruck 5°C<(TgB-TgA)<50°C erfüllen,

wobei die Folie eine Retardation Re in der Ebene von 0,0 bis 3,0 nm und eine Retardation Rth in der Dickenrichtung von -10,0 bis 10,0 nm aufweist,
wobei das thermoplastische Harz (B) eine (Meth)acrylsäureester-Struktureinheit (a), dargestellt durch die nachstehende allgemeine Formel (1):

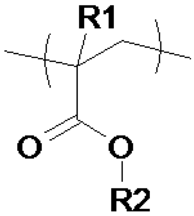

(1)

(wobei R1 ein Wasserstoffatom oder eine Methylgruppe darstellt und R2 eine $C_1$-$C_{16}$-Kohlenwasserstoffgruppe darstellt) und eine aliphatische Vinyl-Struktureinheit (b), dargestellt durch die nachstehende allgemeine Formel (2):

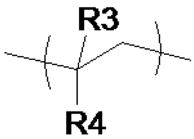

(2)

(wobei R3 ein Wasserstoffatom oder eine Methylgruppe darstellt und R4 eine Cyclohexylgruppe oder eine Cyclohexylgruppe mit einem $C_1$-$C_4$-Kohlenwasserstoffsubstituenten darstellt) umfasst und wobei der Anteil der Summe der (Meth)acrylsäureester-Struktureinheit (a) und der aliphatischen Vinyl-Struktureinheit (b) 90 bis 100 Mol-%, bezogen auf alle Struktureinheiten in dem thermoplastischen Harz (B), beträgt und wobei das Molverhältnis zwischen der (Meth)acrylsäureester-Struktureinheit (a) und der aliphatischen Vinyl-Struktureinheit (b) 55:45 bis 85:15 beträgt,
**dadurch gekennzeichnet, dass** die Folie biaxial gestreckt ist,
wobei eine Streckvergrößerung in mindestens einer Streckrichtung das 1,1- bis 3,0-Fache beträgt.

**2.** Die gestreckte mehrlagige thermoplastische Harzfolie gemäß Anspruch 1, wobei jedes von R1 und R2 in der allgemeinen Formel (1) eine Methylgruppe ist.

**3.** Die gestreckte mehrlagige thermoplastische Harzfolie gemäß Anspruch 1 oder 2, wobei R4 in der allgemeinen Formel (2) eine Cyclohexylgruppe ist.

**4.** Die gestreckte mehrlagige thermoplastische Harzfolie gemäß einem der Ansprüche 1 bis 3, welche die Schicht, die das thermoplastische Harz (B) enthält, auf beiden Oberflächen der Schicht, die das Methacrylatharz (A) enthält, aufweist.

**5.** Die gestreckte mehrlagige thermoplastische Harzfolie gemäß einem der Ansprüche 1 bis 4, die eine Gesamtdicke von 10 bis 1000 μm aufweist.

**6.** Die gestreckte mehrlagige thermoplastische Harzfolie gemäß einem der Ansprüche 1 bis 5, wobei das Verhältnis der Dicke der Schicht, die das thermoplastische Harz (B) enthält, zur Gesamtdicke der Schicht, die das Methacrylatharz (A) enthält, und der Schicht, die das thermoplastische Harz (B) enthält, 5 bis 50 % beträgt.

**7.** Die gestreckte mehrlagige thermoplastische Harzfolie gemäß einem der Ansprüche 1 bis 6, wobei die Schicht, die das thermoplastische Harz (B) enthält, mindestens eines, ausgewählt aus der Gruppe bestehend aus einem Ultraviolettabsorber, einem Antioxidationsmittel, einem Antifärbemittel, einem Antistatikmittel, einem Formtrennmittel, einem Schmiermittel, einem Farbstoff und einem Pigment, enthält.

**8.** Eine optische Folie, umfassend die gestreckte mehrlagige thermoplastische Harzfolie gemäß einem der Ansprüche 1 bis 7.

**9.** Eine Polarisatorschutzfolie, umfassend die optische Folie gemäß Anspruch 8.

**10.** Ein Verfahren zur Herstellung der gestreckten mehrlagigen thermoplastischen Harzfolie gemäß einem der Ansprüche 1 bis 7, welches das Strecken bei einer Strecktemperatur von TgB+25 (°C) bis TgB+65 (°C) umfasst.

## Revendications

**1.** Film de résine thermoplastique multicouche étiré comprenant une couche contenant une résine thermoplastique (B) sur au moins une surface d'une couche contenant une résine de méthacrylate (A), dans lequel le méthacrylate de méthyle constitue au moins 90 % en moles de tous les motifs structurels dans la résine de méthacrylate (A) ; la biréfringence intrinsèque de la résine thermoplastique (B) est de -0,005 à 0,005 ; et la température de transition vitreuse TgA (°C) de la résine de méthacrylate (A) et la température de transition vitreuse TgB (°C) de la résine thermoplastique (B) satisfont à l'expression 5°C < (TgB-TgA) < 50°C,

dans lequel le film a un retard dans le plan Re de 0,0 à 3,0 nm et un retard dans la direction de l'épaisseur Rth de -10,0 à 10,0 nm,
dans lequel la résine thermoplastique (B) comprend un motif structurel ester d'acide (méth)acrylique (a) représenté par la formule générale (1) ci-dessous :

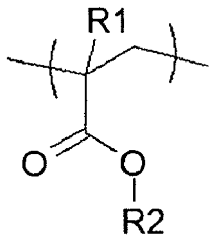

(1)

(dans laquelle R1 représente un atome d'hydrogène ou un groupe méthyle, et R2 représente un groupe hydrocarboné en $C_1$ à $C_{16}$), et un motif structurel vinyle aliphatique (b) représenté par la formule générale (2) ci-dessous :

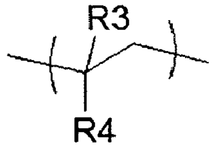

(2)

(dans laquelle R3 représente un atome d'hydrogène ou un groupe méthyle, et R4 représente un groupe cyclohexyle ou un groupe cyclohexyle ayant un substituant hydrocarboné en $C_1$ à $C_4$), et dans lequel le rapport de la somme du motif structurel ester d'acide (méth)acrylique (a) et du motif structurel vinyle aliphatique (b) est de 90 à 100 % en moles par rapport à tous les motifs structurels dans la résine thermoplastique (B), et dans

lequel le rapport molaire entre le motif structurel ester d'acide (méth)acrylique (a) et le motif structurel vinyle aliphatique (b) est de 55/45 à 85/15,
**caractérisé en ce que** le film est étiré biaxialement,
dans lequel l'agrandissement par étirage dans au moins une direction d'étirage est de 1,1 à 3,0 fois.

**2.** Film de résine thermoplastique multicouche étiré selon la revendication 1, dans lequel chacun de R1 et R2 dans la formule générale (1) est un groupe méthyle.

**3.** Film de résine thermoplastique multicouche étiré selon la revendication 1 ou 2, dans lequel R4 dans la formule générale (2) est un groupe cyclohexyle.

**4.** Film de résine thermoplastique multicouche étiré selon l'une quelconque des revendications 1 à 3, qui a la couche contenant la résine thermoplastique (B) sur les deux surfaces de la couche contenant la résine de méthacrylate (A).

**5.** Film de résine thermoplastique multicouche étiré selon l'une quelconque des revendications 1 à 4, qui a une épaisseur totale de 10 à 1000 $\mu$m.

**6.** Film de résine thermoplastique multicouche étiré selon l'une quelconque des revendications 1 à 5, dans lequel le rapport de l'épaisseur de la couche contenant la résine thermoplastique (B) à l'épaisseur totale de la couche contenant la résine de méthacrylate (A) et de la couche contenant la résine thermoplastique (B) est de 5 à 50 %.

**7.** Film de résine thermoplastique multicouche étiré selon l'une quelconque des revendications 1 à 6, dans lequel la couche contenant la résine thermoplastique (B) contient au moins l'un choisi dans le groupe constitué par un agent absorbant les ultraviolets, un antioxydant, un agent anti-coloration, un agent antistatique, un agent de démoulage, un lubrifiant, un colorant et un pigment.

**8.** Film optique comprenant le film de résine thermoplastique multicouche étiré selon l'une quelconque des revendications 1 à 7.

**9.** Film protecteur de polariseur comprenant le film optique selon la revendication 8.

**10.** Méthode pour produire le film de résine thermoplastique multicouche étiré selon l'une quelconque des revendications 1 à 7, qui comprend un étirage à une température d'étirage de TgB + 25 (°C) à TgB + 65 (°C).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2583825 A1
- JP 4878302 B
- JP 2008115314 A